# EUROPÄISCHE PATENTANMELDUNG

(11) **EP 2 600 031 A2**
(43) Veröffentlichungstag der Anmeldung: **05.06.2013**
(21) Anmeldenummer: 12007491.9
(22) Anmeldetag: 02.11.2012
(51) Int. Cl.: F16F 15/14, F16F 15/134, F16H 45/02

(54) **Drehmomentübertragungseinrichtung**

(30) Priorität: 11.11.2011 DE 102011086189; 07.12.2011 DE 102011087902; 01.03.2012 DE 102012203262
(71) Anmelder: Schaeffler Technologies AG & Co. KG, 91074 Herzogenaurach (DE)
(72) Erfinder: Maienschein, Stephan, 76534 Baden-Baden (DE)

(57) **Zusammenfassung**

Drehmomentübertragungseinrichtung (10) mit einer Drehachse (100), umfassend eine erste, mit einer Antriebseinrichtung verbindbare oder Bestandteil dieser bildende Übertragungseinheit (12) aufweisend eine erste Übertragungsbauteilgruppe (16) mit wenigstens zwei um die Drehachse (100) zueinander verdrehbaren Übertragungsbauteilen (18, 22) und eine zweite mit einer Abtriebseinrichtung verbindbare oder Bestandteil dieser bildende Übertragungseinheit (28) aufweisend eine zweite Übertragungsbauteilgruppe (34) mit wenigstens zwei um die Drehachse (100) zueinander verdrehbaren Übertragungsbauteilen (38,40), wobei die Übertragungsbauteile (18, 22, 38, 40) wenigstens einer der ersten oder zweiten Übertragungsbaugruppe (16, 34) in wenigstens einem Übertragungszustand unbegrenzt verdrehbar zueinander sind und

Verbindungsmittel (48) vorgesehen sind, zur Kraftübertragung zwischen der ersten Übertragungseinheit (12) und der zweiten Übertragungseinheit (38) aufweisend ein Verbindungselement (50), wobei an dem Verbindungselement (50) ein Tilger (62) angeordnet ist.

## Beschreibung

Die Erfindung betrifft eine Drehmomentübertragungsrichtung nach dem Oberbegriff von Anspruch 1.

Derartige Drehmomentübertragungseinrichtungen sind allgemein bekannt. Diese weisen eine erste, mit einer Antriebseinrichtung, beispielsweise einer Brennkraftmaschine verbindbare Übertragungseinheit, beispielsweise einen als Zweimassenschwungrad ausgebildeten Torsionsschwingungsdämpfer auf. Der Torsionsschwingungsdämpfer umfasst eine erste Übertragungsbauteilgruppe mit wenigstens zwei um die Drehachse zueinander verdrehbaren Übertragungsbauteilen, beispielsweise ein Dämpfereingangsteil und ein gegenüber dem Dämpfereingangsteil entgegen der Wirkung von Energiespeicherelementen begrenzt verdrehbares Dämpferausgangsteil. Weiterhin umfasst die Drehmomentübertragungseinrichtung eine zweite mit einer Abtriebseinrichtung verbindbare Übertragungseinheit, beispielsweise einen hydrodynamischen Drehmomentwandler aufweisend eine zweite Übertragungsbauteilgruppe mit wenigstens zwei um die Drehachse zueinander verdrehbaren Übertragungsbauteilen, beispielsweise eine Überbrückungskupplung mit einem Kupplungseingangsteil und einem Kupplungsausgangteil. Dabei sind das Kupplungseingangsteil und das Kupplungsausgangsteil der zweiten Übertragungsbaugruppe bei geöffneter Überbrückungskupplung unbegrenzt verdrehbar zueinander.

Die Kraftübertragung zwischen der ersten Übertragungseinheit und der zweiten Kraftübertragungseinheit wird durch Verbindungsmittel, die ein Verbindungselement aufweisen bewirkt. Die Schwingungsisolation der von der Brennkraftmaschine hervorgerufenen Drehungleichförmigkeiten kann bei einem solchen Aufbau nicht ausreichend sein.

Die Aufgabe der vorliegenden Erfindung liegt darin, die Schwingungsdämpfung einer Drehmomentübertragungseinrichtung zu verbessern.

Die Aufgabe wird durch alle Merkmale des Anspruch 1 gelöst. Darin wird eine Drehmomentübertragungseinrichtung mit einer Drehachse vorgeschlagen, umfassend eine erste, mit einer Antriebseinrichtung verbindbare oder Bestandteil dieser bildende Übertragungseinheit aufweisend eine erste Übertragungsbauteilgruppe mit wenigstens zwei um die Drehachse zueinander verdrehbaren Übertragungsbauteilen und eine zweite mit einer Abtriebseinrichtung verbindbare oder Bestandteil dieser bildende Übertragungseinheit aufweisend eine zweite Übertragungsbauteilgruppe mit wenigstens zwei um die Drehachse zueinander verdrehbaren Übertragungsbauteilen, wobei die Übertragungsbauteile wenigstens einer der ersten oder zweiten Übertragungsbaugruppe in wenigstens einem Übertragungszustand unbegrenzt verdrehbar zueinander sind und
Verbindungsmittel vorgesehen sind, zur Kraftübertragung zwischen der ersten Übertragungseinheit und der zweiten Übertragungseinheit aufweisend ein Verbindungselement. An dem Verbindungselement ist ein Tilger angeordnet. Dadurch kann die Schwingungsdämpfung einer derartigen Drehmomentübertragungseinrichtung verbessert werden.

In einer bevorzugten Ausführungsform der Erfindung ist der Tilger als drehzahladaptiver Tilger ausgebildet. Vorteilhafterweise ist der drehzahladaptive Tilger ein drehzahladaptives Fliehkraftpendel. Bevorzugt umfasst das Fliehkraftpendel eine gegenüber einem Pendelflansch radial begrenzt verlagerbare Pendelmasse, wobei der Pendelflansch einteilig mit dem Verbindungselement ausgebildet oder an diesem befestigt ist.

In einer speziellen Ausführungsform der Erfindung umfasst das Fliehkraftpendel wenigstens ein Pendelmassenpaar, bestehend aus zwei jeweils axial an einer Seite des Pendelflansches angeordneter Pendelmassen, die durch Abstandselemente miteinander fest verbunden sind.

In einer weiteren bevorzugten Ausführungsform der Erfindung ist das Verbindungselement über eine erste Anbindungsstelle mit der ersten Übertragungseinheit mittelbar oder unmittelbar und über eine zweite Anbindungsstelle mit der zweiten Übertragungseinheit mittelbar oder unmittelbar verbindbar. Vorzugsweise ist der Tilger radial innerhalb oder außerhalb der ersten und/oder zweiten Anbindungsstelle angeordnet. Auch kann der Tilger radial auf Höhe der ersten und/oder zweiten Anbindungsstelle angeordnet sein.

In einer speziellen Ausgestaltung der Erfindung ist die erste Übertragungseinheit als Torsionsschwingungsdämpfer, insbesondere als Zweimassenschwungrad mit einem Dämpfereingangsteil und einem gegenüber dem Dämpfereingangsteil entgegen der Wirkung von wenigstens einem Energiespeicherelement begrenzt verdrehbaren Dämpferausgangsteil ausgebildet.

Auch kann die erste Übertragungseinheit als Elektromotor mit einem Stator und einem Rotor und/oder als hydrodynamischer Drehmomentwandler mit einem mit dem Verbindungsmittel verbindbaren Wandlergehäuse und/oder als Kupplungseinrichtung, insbesondere als nasslaufende Kupplungseinrichtung ausgebildet sein oder diese jeweils umfassen.

Weiterhin kann die zweite Übertragungseinheit als Torsionsschwingungsdämpfer und/oder hydrodynamischer Drehmomentwandler mit einem mit dem Verbindungsmittel verbindbaren Wandlergehäuse und/oder als Elektromotor mit einem Stator und einem Rotor und/oder als Kupplungseinrichtung insbesondere als nasslaufende Kupplungseinrichtung ausgebildet sein oder diese jeweils umfassen.

Weitere Vorteile und vorteilhafte Ausgestaltungen der Erfindung sind Gegenstand der nachfolgenden Abbildungen, sowie deren Beschreibungsteile, bei deren Darstellung zugunsten der Übersichtlichkeit auf eine maßstabsgetreue Wiedergabe verzichtet wurde. Es zeigen im Einzelnen:
- Figur 1:: Querschnittsansicht einer Drehmomentübertragungseinrichtung in einer ersten speziellen Ausführung der Erfindung.
- Figur 2:: Querschnittsansicht einer Drehmomentübertragungseinrichtung in einer zweiten speziellen Ausführung der Erfindung.
- Figur 3:: Querschnittsansicht einer Drehmomentübertragungseinrichtung in einer dritten speziellen Ausführung der Erfindung.

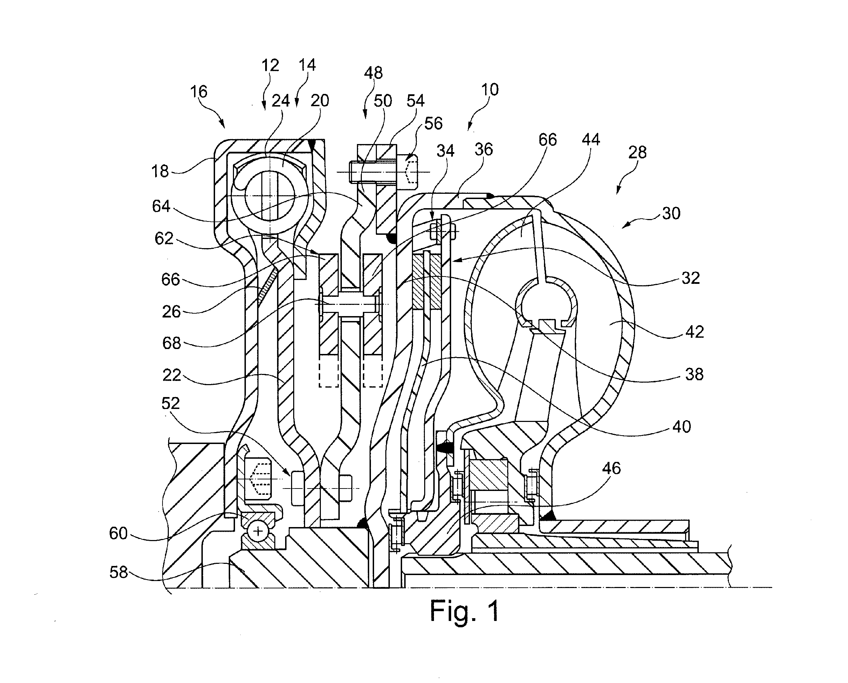

In Figur 1 ist eine Querschnittsansicht einer Drehmomentübertragungseinrichtung 10 in einer ersten speziellen Ausführung der Erfindung dargestellt. Die Drehmomentübertragungseinrichtung 10 ist um eine Drehachse 100 drehbar und weist eine mit einer Antriebseinheit, beispielsweise einer Brennkraftmaschine verbindbare erste Übertragungseinheit 12 auf. Die erste Übertragungseinheit 12 ist als Torsionsschwingungsdämpfer 14, speziell als Zweimassenschwungrad ausgebildet und weist eine erste Übertragungsbauteilgruppe 16, bestehend aus einem mit der Brennkraftmaschine drehfest verbundenen Dämpfereingangsteil 18 und wenigstens ein Energiespeicherelement 20, sowie einem entgegen der Wirkung des Energiespeicherelements 20 zu dem Dämpfereingangsteil 18 begrenzt verdrehbares Dämpferausgangsteil 22. Das Energiespeicherelement 20 kann als Bogenfeder oder Druckfeder ausgeführt sein. Radial außerhalb des Energiespeicherelements 20 ist ein Führungsblech 24 angeordnet, um eine radiale Führung des Energiespeicherelements 20 zu bewirken. Die axiale Positionierung des Dämpfereingangsteils 18 zu dem Dämpferausgangsteil 22 erfolgt mit Hilfe eines Federelements 26, beispielsweise einer Tellerfeder.

Die zweite Übertragungseinheit 28 ist als hydrodynamischer Drehmomentwandler 30 ausgebildet. Der hydrodynamische Drehmomentwandler 30 weist eine als Überbrückungskupplung 32 ausgebildete zweite Übertragungsbauteilgruppe 34 auf. Die Überbrückungskupplung 32 besteht aus einem mit dem Wandlergehäuse 36 einteilig ausgebildeten Kupplungseingangsteil 38 und einem mit diesem reibschlüssig verbindbaren Kupplungsausgangsteil 40. Das Kupplungseingangsteil 38 und das Kupplungsausgangsteil 40 sind in dem Übertragungszustand bei geöffneter Überbrückungskupplung 32 ohne Begrenzungswinkel, somit unbegrenzt zueinander verdrehbar.

In einem anderen Übertragungszustand können das Kupplungseingangsteil 38 und das Kupplungsausgangsteil 40 in Reibeingriff stehen, so dass eine Überbrückung der über ein Pumpenrad 42 und ein Turbinenrad 44 stattfindenden Drehmomentübertragung erfolgen kann. In dem Wandlergehäuse 36 kann ein weiterer Torsionsschwingungsdämpfer, hier nicht dargestellt, eingebracht sein, angeordnet zwischen Wandlergehäuse 36 und Überbrückungskupplung 32 und/oder zwischen Überbrückungskupplung 32 und einer mit der Getriebeeingangswelle verbindbaren Abtriebsnabe 46. Dabei kann das Turbinenrad 44 an dem Dämpfereingangsteil oder an einem gegenüber dem Dämpfereingangsteil über die Wirkung von Energiespeicherelementen begrenzt verdrehbares weiteres Dämpferbauteil befestigt sein.

Zur Kraftübertragung zwischen der ersten Übertragungseinheit 12 und der zweiten Übertragungseinheit 28, insbesondere zwischen dem Dämpferausgangsteil 22 und dem Wandlergehäuse 36 sind Verbindungsmittel 48 vorgesehen, die ein Verbindungselement 50 umfassen. Das Verbindungselement 50 ist mit dem Dämpferausgangsteil 22 in einem radial inneren Bereich über eine erste Anbindungsstelle 52 drehfest verbunden, insbesondere mit Hilfe einer Nietverbindung. Das Verbindungselement 50 erstreckt sich von dieser ersten Anbindungsstelle 52 aus radial nach außen und ist in einem radial äußeren Bereich über eine zweite Anbindungsstelle 54 mit dem Wandlergehäuse 36 befestigt. Hierzu ist ein Zwischenelement 54 an dem Wandlergehäuse 36 befestigt, insbesondere verschweißt, mit dem das Verbindungselement 50 lösbar und drehfest verbunden ist, vorzugsweise mit Hilfe einer Schraubverbindung 56, die derart angeordnet ist, dass ein Zugang zum nachträglichen Lösen oder Befestigen der Schraubverbindung 56 ermöglicht wird.

Die radiale Zentrierung des Verbindungselements 50 erfolgt über die erste Anbindungsstelle 52 mit dem Dämpferausgangsteil 22, welches hierfür radial nach innen derart verlängert ist, um auf einer mit dem Wandlergehäuse 36 fest verbundenen Gehäusenabe 58 aufgenommen zu sein. Die Gehäusenabe 58 erstreckt sich axial von dem Wandlergehäuse 36 weg und nimmt auf einem dem Wandlergehäuse 36 entfernten Teil ein Lager 60 auf, welches der Aufnahme des Dämpfereingangsteils 18 dient und wodurch eine relative Verdrehbarkeit der Gehäusenabe 58 und des Dämpfereingangsteils 18 bewirkt wird.

Weiterhin kann das Verbindungselement 50 eine axiale Positionierung des ersten Übertragungselements 12 zum zweiten Übertragungselement 28 bewirken und durch eine vorzugsweise axial elastische Ausbildung des Verbindungselements 50 auch axiale Bewegungen zwischen dem ersten Übertragungselement 12 und dem zweiten Übertragungselement 28 durch seine axiale Federwirksamkeit aufnehmen.

An dem Verbindungselement 50 ist in einem Bereich radial zwischen der ersten Anbindungsstelle 52 und der zweiten Anbindungsstelle 56 ein Tilger 62, vorzugsweise ein drehzahladaptives Fliehkraftpendel angeordnet. Hierzu ist das Verbindungselement 50 als Pendelflansch 64 ausgeführt, der jeweils axial beidseitig eine Pendelmasse 66 verlagerbar aufnimmt. Die beiden Pendelmassen 66 sind mit Hilfe wenigstens eines in einem Ausschnitt in dem Pendelflansch 64 geführten Abstandselement 68 miteinander verbunden und über hier nicht dargestellte und ebenfalls in Ausschnitten aufgenommene und geführte Abrollelemente entlang einer Pendelbahn umfangsseitig und radial gegenüber dem Pendelflansch 64 verschwenkbar. Dadurch kann eine drehzahladaptive Tilgung von Torsionsschwingungen bewirkt werden.

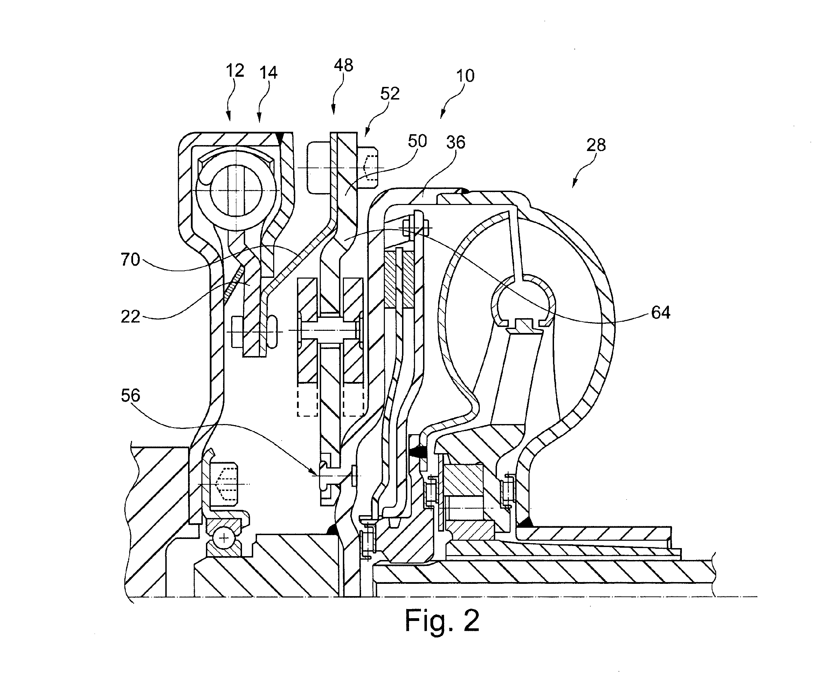

Figur 2 zeigt eine Querschnittsansicht einer Drehmomentübertragungseinrichtung 10 in einer zweiten speziellen Ausführung der Erfindung. Der Aufbau ist ähnlich dem aus Figur 1, doch sind die Verbindungsmittel 48 aus einem axial elastischen Verbindungsblech 70 und einem einteilig mit einem Pendelflansch 64 ausgeführten Verbindungselement 50 gebildet. Das Verbindungsblech 70 dient der Aufnahme von axialen Bewegungen des ersten Übertragungselements 12 gegenüber dem zweiten Übertragungselement 28 und ist mit dem Dämpferausgangsteil 22 drehfest verbunden. Radial weiter außen ist es über eine erste Anbindungsstelle 52 mit dem Verbindungselement 50 über eine lösbare Schraubverbindung drehfest verbunden. Das Verbindungselement 50 erstreckt sich von der ersten Anbindungsstelle 52 aus radial nach innen, um über eine zweite Anbindungsstelle 56 mit dem Wandlergehäuse 36 vernietet zu sein. Radial zwischen der ersten Anbindungsstelle 52 und der zweiten Anbindungsstelle 56 ist der als drehzahladaptive Fliehkraftpendel ausgebildete Tilger 62 gemäß Figur 1 aufgenommen.

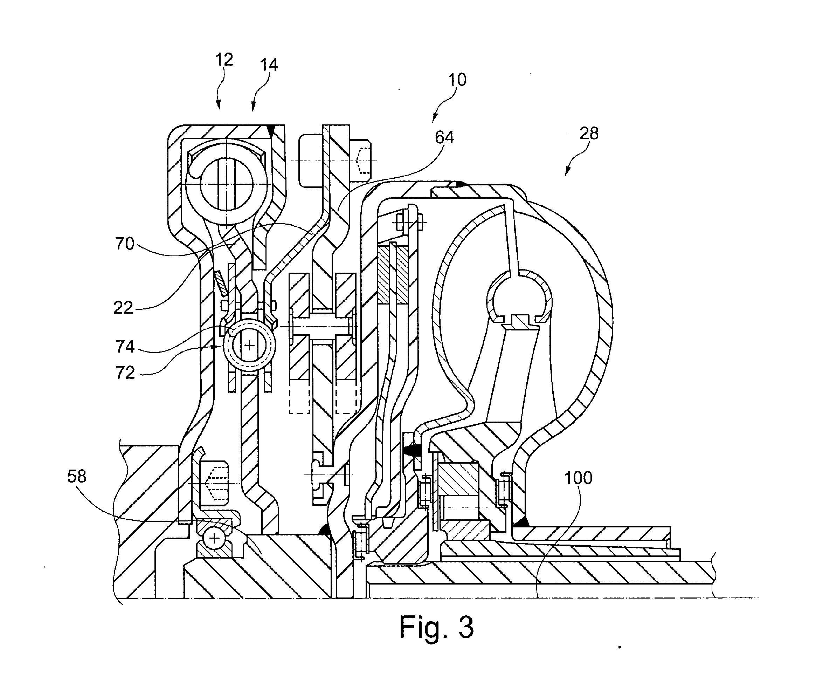

In Figur 3 ist eine Querschnittsansicht einer Drehmomentübertragungseinrichtung 10 in einer dritten speziellen Ausführung der Erfindung dargestellt. Der Aufbau ist ähnlich zu dem aus Figur 2 mit dem Unterschied, dass das Dämpferausgangsteil 22 des Torsionsschwingungsdämpfers 14 radial nach innen derart verlängert ist, um an der Gehäusenabe 58 aufgenommen zu sein. Wirksam zwischen dem Dämpferausgangsteil 22 und dem Verbindungsblech 70 ist einer weitere Dämpferstufe 72 mit wenigstens einem weiteren Energiespeicherelement 74 eingebracht, wobei das Dämpferausgangsteil 22 zugleich das Dämpfereingangsteil dieser zweiten Dämpferstufe 72 bildet und entgegen der Wirkung des Energiespeicherelements 74 begrenzt gegenüber dem Verbindungsblech 70 verdrehbar ist.

Auch kann eine zweite Dämpferstufe wirksam zwischen dem Pendelflansch 64 und dem zweiten Übertragungselement 28 oder sogar als eine einer ersten und einer zweiten Dämpferstufe nachgeschaltete weitere Dämpferstufe eingebracht sein.

### Bezugszeichenliste

- 10: Drehmomentübertragungseinrichtung
- 12: Übertragungseinheit
- 14: Torsionsschwingungsdämpfer
- 16: Übertragungsbauteilgruppe
- 18: Dämpfereingangsteil
- 20: Energiespeicherelement
- 22: Dämpferausgangsteil
- 24: Führungsblech
- 26: Federelement
- 28: Übertragungseinheit
- 30: Drehmomentwandler
- 32: Überbrückungskupplung
- 34: Übertragungsbauteilgruppe
- 36: Wandlergehäuse
- 38: Kupplungseingangsteil
- 40: Kupplungsausgangsteil
- 42: Pumpenrad
- 44: Turbinenrad
- 46: Abtriebsnabe
- 48: Verbindungsmittel
- 50: Verbindungselement
- 52: Anbindungsstelle
- 54: Anbindungsstelle
- 56: Schraubverbindung
- 58: Gehäusenabe
- 60: Lager
- 62: Tilger
- 64: Pendelflansch
- 66: Pendelmasse
- 68: Abstandselement
- 70: Verbindungsblech
- 72: Dämpferstufe
- 74: Energiespeicherelement

## Patentansprüche

1. Drehmomentübertragungseinrichtung (10) umfassend
eine Drehachse (100)
eine erste, mit einer Antriebseinrichtung verbindbare oder Bestandteil dieser bildende Übertragungseinheit (12) aufweisend eine erste Übertragungsbauteilgruppe (16) mit wenigstens zwei um die Drehachse (100) zueinander verdrehbaren Übertragungsbauteilen (18, 22) und
eine zweite mit einer Abtriebseinrichtung verbindbare oder Bestandteil dieser bildende Übertragungseinheit (28) aufweisend eine zweite Übertragungsbauteilgruppe (34) mit wenigstens zwei um die Drehachse (100) zueinander verdrehbaren Übertragungsbauteilen (38, 40)
wobei die Übertragungsbauteile (18, 22, 38, 40) wenigstens einer der ersten oder zweiten Übertragungsbaugruppe (16, 34) in wenigstens einem Übertragungszustand unbegrenzt verdrehbar zueinander sind und
Verbindungsmittel (48) zur Kraftübertragung zwischen der ersten Übertragungseinheit (12) und der zweiten Übertragungseinheit (38) aufweisend ein Verbindungselement (50),
**dadurch gekennzeichnet, dass** an dem Verbindungselement (50) ein Tilger (62) angeordnet ist.

2. Drehmomentübertragungseinrichtung (10) nach Anspruch 1, wobei der Tilger (62) als drehzahladaptiver Tilger ausgebildet ist.

3. Drehmomentübertragungseinrichtung (10) nach Anspruch 2, wobei der drehzahladaptive Tilger ein drehzahladaptives Fliehkraftpendel ist.

4. Drehmomentübertragungseinrichtung (10) nach Anspruch 3, wobei das Fliehkraftpendel eine gegenüber einem Pendelflansch (64) radial begrenzt verlagerbare Pendelmasse (66) umfasst, wobei der Pendelflansch (64) einteilig mit dem Verbindungselement (50) ausgebildet oder an diesem befestigt ist.

5. Drehmomentübertragungseinrichtung (10) nach Anspruch 4, wobei das Fliehkraftpendel wenigstens ein Pendelmassenpaar, bestehend aus zwei jeweils axial an einer Seite des Pendelflansches (64) angeordneter Pendelmassen (66), die durch wenigstens ein Abstandselement (68) miteinander fest verbunden sind, umfasst.

6. Drehmomentübertragungseinrichtung (10) nach einem der Ansprüche 1 bis 5, wobei das Verbindungselement (50) über eine erste Anbindungsstelle (52) mit der ersten Übertragungseinheit (12) mittelbar oder unmittelbar und über eine zweite Anbindungsstelle (56) mit der zweiten Übertragungseinheit (28) mittelbar oder unmittelbar verbindbar ist.

7. Drehmomentübertragungseinrichtung (10) nach einem der Ansprüche 1 bis 5, wobei der Tilger (62) radial innerhalb oder außerhalb der ersten und/oder zweiten Anbindungsstelle (52, 56) angeordnet ist.

8. Drehmomentübertragungseinrichtung (10) nach einem der Ansprüche 1 bis 5, wobei der Tilger (62) radial auf Höhe der ersten und/oder zweiten Anbindungsstelle (52, 56) angeordnet ist.

9. Drehmomentübertragungseinrichtung (10) nach einem der Ansprüche 1 bis 8, wobei die erste Übertragungseinheit (12) als Torsionsschwingungsdämpfer (14) mit einem Dämpfereingangsteil (18) und einem gegenüber dem Dämpfereingangsteil (18) entgegen der Wirkung von wenigstens einem Energiespeicherelement (20) begrenzt verdrehbaren Dämpferausgangsteil (22) ausgebildet ist.

10. Drehmomentübertragungseinrichtung (10) nach einem der Ansprüche 1 bis 9, wobei die erste Übertragungseinheit (12) als Elektromotor mit einem Stator und einem Rotor ausgebildet ist oder diesen umfasst.

11. Drehmomentübertragungseinrichtung (10) nach einem der Ansprüche 1 bis 10, wobei die erste Übertragungseinheit (12) als hydrodynamischer Drehmomentwandler (30) mit einem mit dem Verbindungsmittel (48) verbindbaren Wandlergehäuse (36) ausgebildet ist oder diesen umfasst.

12. Drehmomentübertragungseinrichtung (10) nach einem der Ansprüche 1 bis 11, wobei die erste Übertragungseinheit (12) als Kupplungseinrichtung ausgebildet ist oder diese umfasst.

13. Drehmomentübertragungseinrichtung (10) nach einem der Ansprüche 1 bis 12, wobei die zweite Übertragungseinheit (28) als hydrodynamischer Drehmomentwandler (30) mit einem mit dem Verbindungsmittel (48) verbindbaren Wandlergehäuse (36) ausgebildet ist.

14. Drehmomentübertragungseinrichtung (10) nach einem der Ansprüche 1 bis 13, wobei die zweite Übertragungseinheit (28) als Elektromotor mit einem Stator und einem Rotor ausgebildet ist oder diesen umfasst.

15. Drehmomentübertragungseinrichtung (10) nach einem der Ansprüche 1 bis 14, wobei die zweite Übertragungseinheit (28) als Kupplungseinrichtung ausgebildet ist oder diese umfasst.
